# EUROPEAN PATENT APPLICATION

(11) **EP 2 590 240 A1**
(43) Date of publication of application: **08.05.2013**
(21) Application number: 11800336.7
(22) Date of filing: 11.05.2011
(51) Int. Cl.: H01M 2/10, H01M 2/12

(54) **BATTERY MODULE**

(30) Priority: 30.06.2010 JP 2010148666
(71) Applicant: Panasonic Corporation, Kadoma-shi Osaka 571-8501 (JP)
(72) Inventor: OKUTANI, Oose, Osaka -shi ,Osaka 540-6207 (JP); SHIMIZU, Keisuke, Osaka -shi Osaka 540-6207 (JP)
(74) Representative: Grünecker, Kinkeldey, Stockmair & Schwanhäusser
(86) International application number: PCT/JP2011/002612
(87) International publication number: WO 2012/001858

(57) **Abstract**

A case of a battery module 21 includes a battery chamber 31, and an exhaust chamber 33. A member 41 having a lower melting point than a melting point of the case is provided on an inner surface of the case located in a release direction of gas.

## Description

### TECHNICAL FIELD

The present invention relates to battery modules.

### BACKGROUND ART

In recent years, reusable secondary batteries have been used as power sources of, e.g., portable electronic devices or mobile telecommunication devices to save resources and energy. Use of such secondary batteries as power sources of e.g., vehicles has been considered to reduce the amount of fossil fuel used, the amount of carbon dioxide emissions, etc.

Specifically, it has been suggested to electrically connect secondary batteries together, thereby forming a battery module, and use the battery module as such a power source as above. In some cases, it has been suggested to further connect battery modules in series, thereby forming a battery pack, and use the battery pack as such a power source as above.

For example, PATENT DOCUMENT 1 describes a battery module having a case partitioned into a battery chamber and an exhaust chamber. With such a battery module, even if a high-temperature gas is released from a secondary battery (cell) in a battery chamber, the high-temperature gas is released from an exhaust chamber to outside a case without filling the interior of the battery chamber. This can reduce the influence of the high-temperature gas on normal cells in the battery chamber.

### CITATION LIST

### PATENT DOCUMENT

PATENT DOCUMENT 1: Japanese Patent Publication No. 2007-027011

### SUMMARY OF THE INVENTION

### TECHNICAL PROBLEM

When a secondary battery is in an abnormal situation, a high-temperature gas is released from the secondary battery (first abnormal mode). However, attention needs to be given also to a situation where, in order to ensure the safety of the secondary battery, not only a high-temperature gas, but also the contents of the cell are released from the secondary battery to outside the battery just in case (second abnormal mode).

When the cell is in the second abnormal mode, the high-temperature gas released from the cell is released through the exhaust chamber to outside the case, and the contents (released matter) released from the cell are deposited on an inner surface of the exhaust chamber without being released through the exhaust chamber to outside the case (deposition of the released matter). Thus, an exhaust path is blocked, leading to an increase in pressure loss across the exhaust chamber to thereby reduce exhaust efficiency.

It is therefore an object of the present invention to provide a battery module the exhaust efficiency of which is maintained even when a cell is in a second abnormal mode.

### SOLUTION TO THE PROBLEM

A battery module according to the present invention includes: a plurality of cells arranged and housed in a case. The case of the battery module includes a battery chamber, and an exhaust chamber. A member having a lower melting point than the case is provided on an inner surface of the case located in a release direction of gas.

### ADVANTAGES OF THE INVENTION

According to the present invention, even when one of the cells is in a second abnormal mode, the exhaust efficiency of the battery module can be maintained.

### BRIEF DESCRIPTION OF THE DRAWINGS

[FIG. 1] FIG. 1 is a longitudinal cross-sectional view of a cell according to an embodiment of the present invention.
[FIG. 2] FIG. 2(a) is a perspective view of a battery module according to the embodiment of the present invention, FIG. 2(b) is a cross-sectional view taken along the line IIB-IIB illustrated in FIG. 2(a), and FIG. 2(c) is an enlarged view of the region IIC illustrated in FIG. 2(b).
[FIG. 3] FIG. 3 is an enlarged cross-sectional view of a battery module according to another embodiment of the present invention.
[FIG. 4] FIG. 4 is an enlarged cross-sectional view of a battery module according to still another embodiment of the present invention.

### DESCRIPTION OF EMBODIMENTS

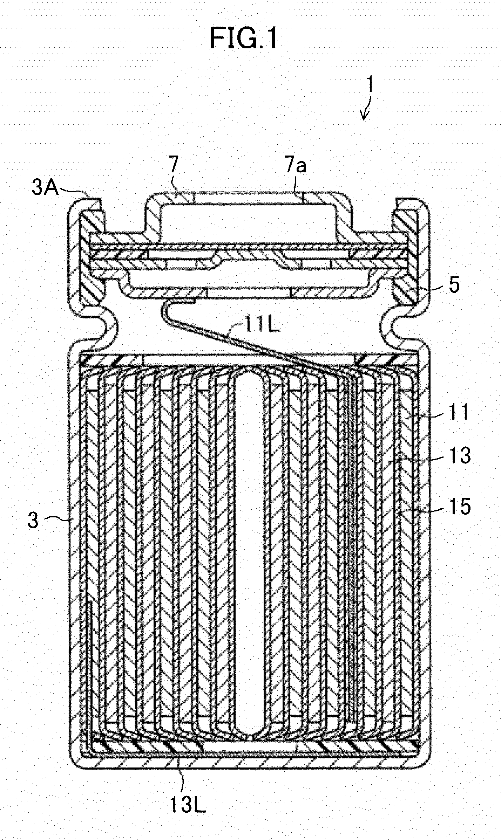

Embodiments of the present invention will be described hereinafter with reference to the drawings. The present invention is not limited to the following embodiments. FIG. 1 is a longitudinal cross-sectional view of a cell 1 according to this embodiment.

The cell 1 of this embodiment is, for example, a lithium ion secondary battery, and is configured such that an opening of a battery case 3 is sealed via a sealing plate 7 with a gasket 5 interposed between the battery case 3 and the sealing plate 7. The battery case 3 houses a nonaqueous electrolyte and an electrode group, and the electrode group is formed by winding a positive electrode sheet 11 and a negative electrode sheet 13 with a separator 15 interposed therebetween. The positive electrode sheet 11 is connected through a positive electrode lead 11L to the sealing plate 7, and the negative electrode sheet 13 is connected through a negative electrode lead 13L to the battery case 3.

The sealing plate 7 has a vent 7a. Thus, when the cell 1 is in a first abnormal mode, a high-temperature gas is released through the vent 7a to outside the battery case 3. When the cell 1 is in a second abnormal mode, a high-temperature gas (heat) and the contents of the cell 1 are released through the vent 7a to outside the battery case 3.

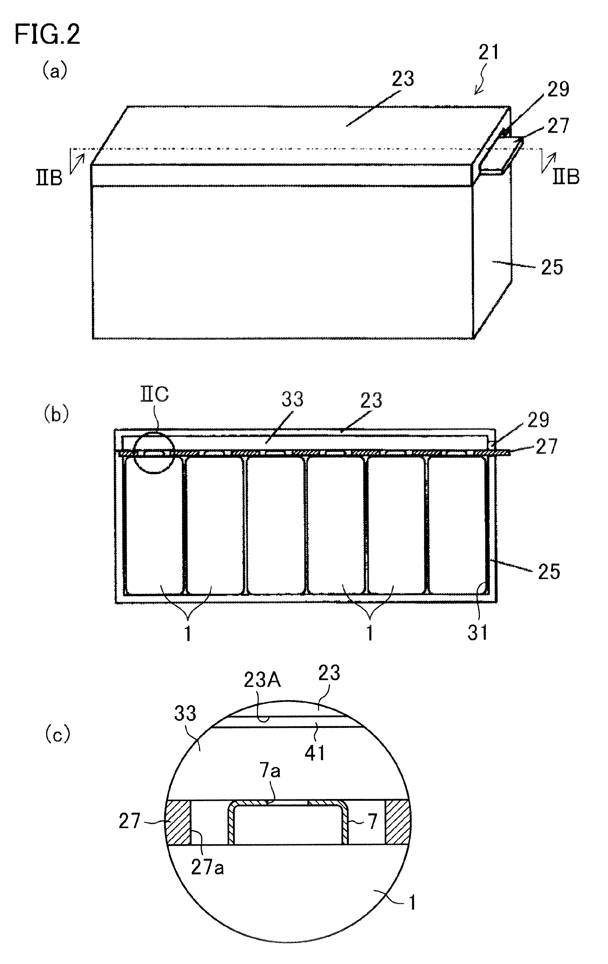

FIG. 2(a) is a perspective view of a battery module 21 according to this embodiment, FIG. 2(b) is a cross-sectional view taken along the line IIB-IIB in FIG. 2(a), and FIG. 2(c) is an enlarged view of the region IIC illustrated in FIG. 2(b). In order to prevent the drawings from being complicated, the outer shape of each of cells 1 is simplified in each of FIGS. 2(b) and 2(c).

The battery module 21 according to this embodiment has a plurality of cells 1, 1, .. housed in a case. The case includes a lid 23 and a housing 25 which each have a recess, and a partition plate 27. The lid 23 and the housing 25 are disposed such that their recesses are opposed to each other, and the partition plate 27 is interposed between the lid 23 and the housing 25. In such a case, a space defined by the inner surfaces of the recess of the housing 25 and the partition plate 27 is a battery chamber 31, and a space defined by the inner surfaces of the recess of the lid 23 and the partition plate 27 is an exhaust chamber 33.

In the battery chamber 31, the plurality of cells 1, 1, ... are housed in the recess of the housing 25 with their sealing plates 7 facing upward, and are arranged in a longitudinal direction of the case. Therefore, the partition plate 27 is disposed near the sealing plates 7 of the plurality of cells 1, 1, ..., and is in close contact with open ends 3A of battery cases 3 thereof (see FIG. 1). The partition plate 27 has through holes 27a, 27a, ... spaced in a longitudinal direction of the partition plate 27, and the sealing plate 7 of each of the cells 1 is exposed from a corresponding one of the through holes 27a, 27a, .... Thus, a vent 7a of the sealing plate 7 of the cell 1 communicates through the corresponding through hole 27a of the partition plate 27 with the interior space of the exhaust chamber 33.

The exhaust chamber 33 has an exhaust port 29. Specifically, a cutout portion is formed in one longitudinal end surface of the lid 23, and thus, a gap exists in a portion of one longitudinal end surface of the case between the lid 23 and the housing 25. The gap is the exhaust port 29.

A low-melting-point member 41 is provided on an inner surface of the exhaust chamber 33, in particular, the bottom surface 23A of the recess of the lid 23 (hereinafter referred to as "the inner surface of the lid"). The low-melting-point member 41 is film-like as illustrated in FIG. 2(c), and is designed such that when one of the cells 1 is in a second abnormal mode, released matter is deposited on the surface of the low-melting-point member 41, and then, the low-melting-point member 41 is molten by released heat. To address this design, the melting point of the low-melting-point member 41 is preferably optimized. The reason for this is that when the melting point of the low-melting-point member 41 is excessively low, the low-melting-point member 41 is immediately molten, and thus, the provision of the low-melting-point member 41 becomes meaningless.

The inventors of this application have recognized that when a 0.5-2-mm-thick fluorine resin layer having a melting point of 200°C is used as the low-melting-point member 41, released matter is deposited on the surface of the low-melting-point member 41, and then, the low-melting-point member 41 is molten by released heat to scatter the released matter.

A case of a battery module is generally designed so as not to be molten even when, e.g., a high-temperature gas or the contents of a cell are released from one of the cells. Thus, the amount of the released heat is smaller than that of heat required to melt the lid 23.

In view of the above, the melting point of the low-melting-point member 41 may be lower than that of the case, and is preferably higher than or equal to 200°C. Here, the lid 23 and the housing 25 are often made of, e.g., stainless steel or iron, and thus, the melting point of the case is in the neighborhood of 1500°C, or higher than 1500°C. Therefore, examples of a material of the low-melting-point member 41 can include polyimide, polyamideimide, PPS (polyphenylene sulfide), any fluororesin, or a metal, such as aluminum.

In this embodiment, even when one of the cells 1 forming the battery module 21 is in the second abnormal mode, the low-melting-point member 41 can ensure an exhaust path in the battery module 21. This mechanism will be specifically described hereinafter.

When one of the cells 1 is in the second abnormal mode, a high-temperature gas (heat) and the contents of the cell 1 are released through the vent 7a of the corresponding sealing plate 7. The speed of this release is very high. Thus, the high-temperature gas and the released matter move in a release direction in which they are released, i.e., moves through the corresponding through hole 27a of the partition plate 27 to the surface of the low-melting-point member 41. The released matter adheres to the surface of the low-melting-point member 41, and is cooled on the surface so as to be deposited on the surface of the low-melting-point member 41. In contrast, the high-temperature gas reaches the surface of the low-melting-point member 41, moves to the exhaust port 29 along the surface, and is released through the exhaust port 29 to outside the exhaust chamber 33.

Immediately after one of the cells 1 has entered into the second abnormal mode, the amount of the released heat is not so large. Furthermore, since the amount of the released heat is not so large, the released heat escapes through the low-melting-point member 41 into the lid 23. In view of the above, immediately after the cell 1 has entered into the second abnormal mode, the temperature of the low-melting-point member 41 does not significantly increase.

However, with the passage of time (as the heat release proceeds), the amount of the released heat increases. This makes it difficult to allow the released heat to escape through the low-melting-point member 41 into the lid 23, thereby causing an increase in the temperature of the low-melting-point member 41 (in particular, the surface of the low-melting-point member 41). Thus, when the temperature of the surface of the low-melting-point member 41 increases to the melting point of the low-melting-point member 41, the surface of the low-melting-point member 41 is molten, and the molten surface of the low-melting-point member 41 is scattered into the exhaust chamber 33. In this case, the released matter has adhered to the surface of the low-melting-point member 41, and thus, the released matter is scattered by the scattering of the surface of the low-melting-point member 41.

Although the foregoing description was given step by step, the time required between the heat release and the completion of the heat release is about a few seconds (e.g., 1.5 seconds). Therefore, actually, as soon as the heat release starts, the low-melting-point member 41 is scattered.

As described above, when one of the cells 1 is in the second abnormal mode, the released matter adheres to the surface of the low-melting-point member 41, and the surface of the low-melting-point member 41 and the released matter are scattered by the released heat. This can prevent the deposition of the released matter, thereby ensuring an exhaust path in the battery module 21.

When the low-melting-point member 41 is a single layer made of a low-melting-point material, the thickness of the low-melting-point member 41 is preferably larger than when the low-melting-point member 41 is a single layer made of a high-melting-point material.

The thickness of the low-melting-point member 41 depends on, not only the melting point of the low-melting-point member 41, but also the amount of the released heat, etc., thus depends on circumstances, and may be freely set to an appropriate thickness. The inventors of this application have recognized that when a 0.2-1-mm-thick aluminum film (having a melting point af 650°C) is used as the low-melting-point member 41, the thickness of deposited matter on the inner surface 23A of the lid 23 can be reduced to a half or less.

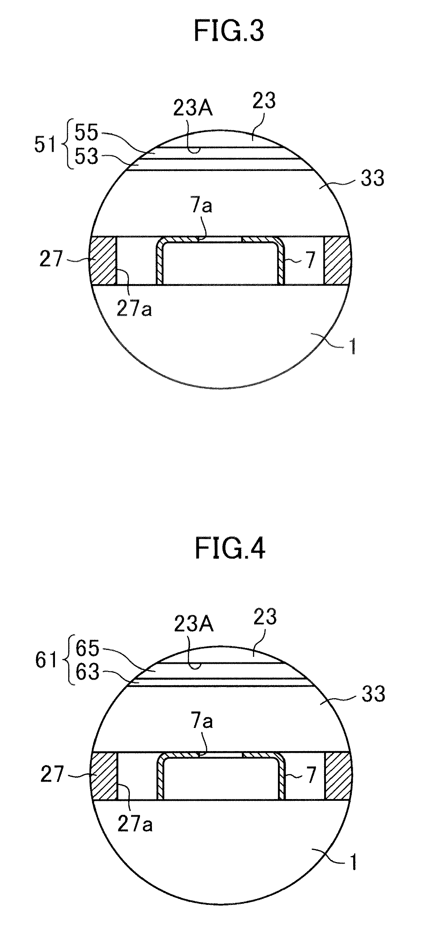

However, in some cases, the entire low-melting-point member 41 is molten during the heat release, and thus, the released matter cannot be sufficiently scattered. To address this problem, instead of the low-melting-point member 41, a low-melting-point member configured such that the degree of difficulty of melting the low-melting-point member increases from near the battery chamber 31 to near the inner surface 23A of the lid 23 is more preferably used. Examples of such a low-melting-point member include low-melting-point members 51 and 61 respectively illustrated in FIGS. 3 and 4. FIGS. 3 and 4 are each an enlarged cross-sectional view of a battery module. In order to prevent the drawings from being complicated, the outer shape of each of cells 1 is simplified also in each of FIGS. 3 and 4.

In an example of the low-melting-point member 51 illustrated in FIG. 3, layers having different melting points are stacked. A layer (low-melting-point layer) 53 having a relatively low melting point is formed near the battery chamber 31 (located apart from an inner surface of the case), and a layer (high-melting-point layer) 55 having a relatively high melting point is formed near the inner surface 23A of the lid 23 (located near the inner surface of the case). As such, as the melting of the low-melting-point member 51 proceeds, the melting point of a portion of the low-melting-point member 51 to be molten increases. Therefore, when one of the cells 1 is in the second abnormal mode, the low-melting-point layer 53 is molten to thereby scatter released matter deposited on the surface of the low-melting-point layer 53, and the high-melting-point layer 55 is then molten to thereby scatter released matter newly adhering to the surface of the high-melting-point layer 55. Thus, the released matter can be sufficiently scattered, thereby maintaining the exhaust efficiency of the battery module 21.

In the low-melting-point member 51 illustrated in FIG. 3, the heat capacity of the low-melting-point layer 53 is more preferably lower than that of the high-melting-point layer 55. In order to adjust the heat capacity, for example, the thickness of each of the layers may be optimized. The inventors of this application have recognized that when a 30-40-µm-thick epoxy layer is used as the low-melting-point layer 53, and a 0.8-mm-thick aluminum layer is used as the high-melting-point layer 55, this can ensure an exhaust path in the battery module 21.

In another example of the low-melting-point member 51 illustrated in FIG. 3, layers having different heat capacities are stacked. A layer (low-heat-capacity layer) 53 having a relatively low heat capacity is formed near the battery chamber 31 (located apart from the inner surface of the case), and a layer (high-heat-capacity layer) 55 having a relatively high heat capacity is formed near the inner surface 23A of the lid 23 (located near the inner surface of the case). As such, as the melting of the low-melting-point member 51 proceeds, the heat capacity of a portion of the low-melting-point member 51 to be molten increases. Therefore, even when the layer located near the inner surface of the case has a lower melting point than the layer located apart from the inner surface of the case, the low-heat-capacity layer 53 is molten to thereby scatter released matter deposited on the surface of the low-heat-capacity layer 53, and the high-heat-capacity layer 55 is then molten to thereby scatter released matter newly adhering to the surface of the high-heat-capacity layer 55. Thus, the released matter can be sufficiently scattered, thereby maintaining the exhaust efficiency of the battery module 21.

The low-melting-point member 51 illustrated in FIG. 3 may include three or more stacked layers. In this case, the low-melting-point member 51 is preferably configured such that the layers are stacked from near the battery chamber 31 to near the inner surface 23A of the lid 23 in ascending order of melting point. Alternatively, the low-melting-point member 51 is preferably configured such that the layers are stacked from near the battery chamber 31 to near the inner surface 23A of the lid 23 in ascending order of heat capacity.

In the low-melting-point member 61 illustrated in FIG. 4, layers made of an identical material and having different thicknesses are stacked. Specifically, a relatively thin layer (thin layer) 63 is formed near the battery chamber 31 (located apart from the inner surface of the case), and a relatively thick layer (thick layer) 65 is formed near the inner surface 23A of the lid 23 (located near the inner surface of the case).

The thin layer 63 and the thick layer 65 are made of an identical material. However, when the thick layer 65 is formed on the inner surface 23A of the lid 23, and the thin layer 63 is then formed on the thick layer 65, an interface is formed between the thin layer 63 and the thick layer 65, and discontinuous heat transfer occurs at the interface. Thus, the low-melting-point member 61 illustrated in FIG. 4 exhibits thermal behavior different from that of a single layer made of an identical material, and after the thin layer 63 is molten so as to be scattered, the melting of the thick layer 65 starts. The inventors of this application have recognized that when a 0.5-mm-thick aluminum layer is used as the thin layer 63, and a 0.8-mm-thick aluminum layer is used as the thick layer 65, the thin layer 63 is molten so as to be scattered, and then, the melting of the thick layer 65 starts, thereby maintaining the exhaust efficiency of the battery module 21.

The low-melting-point member 61 illustrated in FIG. 4 may include three or more stacked layers. In this case, the low-melting-point member 61 is preferably configured such that the layers are formed from near the battery chamber 31 to near the inner surface 23A of the lid 23 in ascending order of thickness.

Such low-melting-point members 41, 51, or 61 may be provided on the inner surface 23A of the lid 23 by metallurgical bonding (e.g., laser welding or resistance welding), or may be mechanically bonded to the inner surface 23A of the lid 23 (bonded to the inner surface 23A through, e.g., a bolt or crimped onto the inner surface 23A). In the latter case, a hole may be formed in the lid 23, and a portion of the low-melting-point member 41, 51, or 61 may be inserted into the hole of the lid 23.

The low-melting-point member 41, 51, or 61 may be provided on the entire inner surface 23A of the lid 23 (the former location), or may be provided only on portions of the inner surface 23A of the lid 23 to which the released matter is anticipated to adhere (the latter locations). The inventors of this application conducted an experiment in which the low-melting-point member 41 was provided at the former location, and the experiment showed that only the portions of the low-melting-point member 41 at the latter locations were scattered. Thus, when the low-melting-point member 41, 51, or 61 is provided at each of the latter locations, this can prevent the deposition of the released matter. On the other hand, when the low-melting-point member 41, 51, or 61 is provided at the former location, the production efficiency of the battery module 21 can be maintained. In this embodiment, the latter locations correspond to portions of the inner surface 23A of the lid 23 located immediately above the vents 7a of the sealing plates 7.

In summary, when one of the cells 1 forming the battery module 21 according to this embodiment is in the second abnormal mode, the released matter adheres to the surface of the low-melting-point member 41, and the low-melting-point member 41 is molten by the released heat so as to be scattered together with the released matter. In view of the above, in the battery module 21 according to this embodiment, an exhaust path is ensured, thereby maintaining the exhaust efficiency.

Since the exhaust efficiency of the battery module 21 can be maintained, this can prevent a high-temperature gas from being returned from the exhaust chamber 33 to the battery chamber 31. Thus, normal ones of the cells 1, 1, ... in the battery chamber 31 can be prevented from being exposed to the high-temperature gas, thereby ensuring the safety of the battery module 21.

Furthermore, when one of the cells 1 forming the battery module 21 according to this embodiment is in the first abnormal mode, a high-temperature gas passes through the vent 7a of the cell 1, the corresponding through hole 27a of the partition plate 27, and the exhaust chamber 33, and is released through the exhaust port 29. This can ensure the safety of the battery module 21 without depending on abnormal modes in this embodiment.

The battery module of this embodiment may be configured as follows.

The material, thickness, etc., of the low-melting-point member may be freely selected as appropriate depending on, e.g., uses of the battery module, and it is clear that the specific example of each of the material and thickness of the low-melting-point member listed in the embodiment is merely an example.

The low-melting-point member may be provided on the inner surface of the case located in a direction in which gas is released. Therefore, the location of the low-melting-point member may be determined depending on the location of each of the vents. For example, when the vent is formed in the bottom surface of the battery case, the exhaust chamber may be provided below the battery chamber in FIG. 2, and the low-melting-point member may be provided on the bottom surface of the exhaust chamber. When, as in this embodiment, the battery chamber and the exhaust chamber are defined by the partition plate, the low-melting-point member may be provided on the inner surface of the case opposed to the partition plate.

The case is not limited to the structure of the case illustrated in FIG. 2. For example, the lid may be a flat plate. In this case, the partition plate may be disposed in the recess of the housing.

The partition plate may be a wiring board for providing connection between cells. In this case, the number of parts of the battery module can be reduced.

The exhaust port may be formed in one longitudinal end of the case, and the size of the exhaust port is not limited to the size illustrated in FIG. 2. When the exhaust port is formed in a portion of one longitudinal end surface of the case, the exhaust port is preferably closer to the battery chamber than to the low-melting-point member. This allows a high-temperature gas to be smoothly released to outside the exhaust chamber.

The plurality of cells may be connected in parallel in the battery chamber, or may be connected in series therein. When the partition plate is used as a wiring board, the plurality of cells are preferably connected in parallel. It is clear that the number of the cells forming the battery module is not limited to six.

A cooling unit for cooling the cells may be disposed outside the cells in the battery chamber. This can further improve the safety of the battery module.

The cells may be prismatic lithium ion secondary batteries. In this case, the electrode group may be configured such that the positive electrode sheet and the negative electrode sheet are stacked with the separator interposed therebetween.

The positive electrode sheet may be connected through a corresponding current collector plate to the sealing plate. The negative electrode sheet may be connected through a corresponding current collector plate to the battery case. This can reduce the resistance during the collection of current.

Although materials of components of each of the cells (materials of the positive electrode, the negative electrode, the separator, the nonaqueous electrolyte, the battery case, the positive electrode lead, and the negative electrode lead) were not described, materials which can be used as components of a lithium ion secondary battery can be used without being particularly limited.

Such battery modules can be used as power sources of, e.g., not only vehicles, but also electronic devices or communication devices. Such a battery module may be used singly as a power source. Alternatively, battery modules may be electrically connected together to form a battery pack, and the battery pack may be used as a power source.

### INDUSTRIAL APPLICABILITY

As described above, the battery module according to the present invention provides a high level of safety, and thus, is useful for, e.g., power sources of portable electronic devices, mobile telecommunication devices, or vehicles.

### DESCRIPTION OF REFERENCE CHARACTERS

1 CELL
21 BATTERY MODULE
23 LID
23A INNER SURFACE
25 HOUSING
27 PARTITION PLATE
27a THROUGH HOLE
31 BATTERY COMPARTMENT
33 EXHAUST COMPARTMENT
41 LOW-MELTING-POINT MEMBER
51 LOW-MELTING-POINT MEMBER
53 LOW-MELTING-POINT LAYER (LAYER LOCATED APART FROM INNER SURFACE OF CASE)
55 HIGH-MELTING-POINT LAYER (LAYER LOCATED NEAR INNER SURFACE OF CASE)
61 LOW-MELTING-POINT MEMBER
63 THIN LAYER (LAYER LOCATED APART FROM INNER SURFACE OF CASE)
65 THICK LAYER (LAYER LOCATED NEAR INNER SURFACE OF CASE)

## Claims

1. A battery module comprising:
a plurality of cells arranged and housed in a case, wherein
the case includes a battery chamber housing the plurality of cells, and an exhaust chamber through which a gas released from one of the cells is released to outside the case, and
a member having a lower melting point than the case is provided on an inner surface of the case located in a release direction in which the gas is released from the cell to the exhaust chamber.

2. The battery module of claim 1, wherein
the melting point of the member is higher than or equal to 200°C.

3. The battery module of claim 1 or 2, wherein
the member includes two or more stacked layers, and
the layer located apart from the inner surface of the case has a lower melting point than the layer located near the inner surface of the case.

4. The battery module of claim 1 or 2, wherein
the member includes two or more stacked layers, and
the layer located apart from the inner surface of the case has a lower heat capacity than the layer located near the inner surface of the case.

5. The battery module of claim 1 or 2, wherein
the member includes two or more stacked layers made of an identical material, and
the layer located apart from the inner surface of the case is thinner than the layer located near the inner surface of the case.

6. The battery module of any one of claims 1-5, wherein
the member is provided on the entire inner surface of the case located in the release direction.

7. The battery module of any one of claims 1-6, wherein
the cells are lithium ion secondary batteries.
